# EUROPÄISCHE PATENTSCHRIFT

(11) **EP 2 837 530 B1**
(45) Veröffentlichungstag und Bekanntmachung des Hinweises auf die Patenterteilung: **20.04.2016**
(21) Anmeldenummer: 14154517.8
(22) Anmeldetag: 10.02.2014
(51) Int. Cl.: B60R 21/0136, G01L 5/00

(54) **Aufprallsensor mit elastisch deformierbarem Schlauch und Drucksensor und radialer Öffnung im Schlauch zur Befestigung**
Impact sensor having an elastically deformable hose and pressure sensor and radial opening in the hose for attachment
Capteur de choc doté d'un tuyau déformable élastiquement et capteur de pression et ouverture radiale dans le tuyau pour la fixation

(30) Priorität: 12.08.2013 DE 102013215856
(43) Veröffentlichungstag der Anmeldung: 18.02.2015
(73) Patentinhaber: Continental Automotive GmbH, 30165 Hannover (DE)
(72) Erfinder: Plötz, Florian, 93161 Sinzing (DE); Waltz, Markus, 96055 Regensburg (DE); Wieand, Christian, 93173 Grünthal (DE)
(74) Vertreter: Büchner, Jörg

(56) Entgegenhaltungen:
- EP-A2- 1 674 679
- DE-A1-102009 041 468
- DE-A1-102011 011 963
- DE-C- 568 964
- DE-U- 7 039 327
- GB-A- 102 145

## Beschreibung

Die Erfindung betrifft einen Aufprallsensor gemäß den unabhängigen Ansprüchen.

Ein Kraftfahrzeug weist häufig einen, oft auch mehrere Aufprallsensoren zur Erzeugung eines von der Art und/oder Stärke des Aufpralls abhängigen Signals auf, vorzugsweise auch zur Erkennung eines Fußgängeraufpralls.

Ein dazu geeigneter Aufprallsensor besteht beispielsweise aus einem elastisch deformierbaren Schlauch mit einem Hohlraum und zumindest einem Drucksensor zur Erfassung der Druckänderung im Hohlraum des Schlauchs. Derartige Aufprallsensoren sind beispielsweise zwischen dem Dämpfungsschaum und dem Querträger im Bereich der Stoßstange angeordnete und dienen in Kraftfahrzeugen der Erkennung von Aufprallsituationen, insbesondere auch der Unterscheidung eines Aufpralls eines Fußgängers von anderen Aufprallereignissen und sind beispielsweise aus der EP 937612 A2 bekannt.

Aus der DE 10 2011 011 962 A1 ist ein solcher Aufprallsensor mit einem Schlauch aus vernetzten Silikonmaterial bekannt, welcher gemäß der DE 10 2011 011 963 A1 über ein Anschlussrohrstück geschoben und dort mittels eines Klemmmittels mechanisch befestigt wird. Die Anbringung des Klemmmittels erfordert jedoch einen weiteren Arbeitsschritt. Zur Gewährleistung einer druckdichten Verbindung und Verhinderung eines Abrutschens des Schlauchs sind jedoch geeignete Befestigungsmaßnahmen erforderlich. Die beiden genannten Anmeldungen als auch die DE 10 2011 011 964 A1 beschreiben auch weitere konstruktive Einzelheiten der Anordnung eines solchen Aufprallsensors im Fahrzeug sowie des Aufprallsensors selbst.

Zudem ist aus der nicht vorveröffentlichten DE 102013101770 A1 eine Verklebung zwischen Silikonschlauch und Anschlussrohrstück bekannt.

Die DE-OS 20 52 293 als auch DE 37 54 548 C2, oder AT 185 178 zeigen grundsätzlich verschiedene Konzepte einer Befestigung von Schläuchen untereinander bzw. an anderen Baugruppen. Bei der AT 185 178 wird der Stutzen mit Ringwülsten strukturiert und der an sich einheitlich hohlzylindrische, aber eben elastische Schlauch aufgepresst, so dass sich der Schlauch an die Wülste entsprechend anpresst.

Bei der DE-OS 20 52 293 wird eine Klemmvorrichtung beschrieben, welche auf die zuvor lose übereinander geschobenen Schläuche gebracht und dann verklemmt wird. Dazu sind aber eben diese zwei zusätzlichen Elemente der Klemmvorrichtung erforderlich.

Die GB 102145 A zeigt eine Schraubverbindung bei Kunststoffschläuchen, welche zusätzlich durch eine auf die Schläuche aufgesetzte Feder gesichert ist, indem ein Ende dieser Feder in einer Position durch ein dort vorgesehene Öffnung im Schlauch eindringt.

Auch die DE 568 964 oder EP 1 674 679 A2 zeigen Schlauchbefestigungen mit zusätzlichem Befestigungsmittel in für andere, abweichende Anwendungsfälle.

Die Aufgabe der vorliegenden Erfindung ist es, eine besonders geeignete Ausgestaltung eines solchen Aufprallsensors anzugeben. Diese Aufgabe wird durch die Merkmale der unabhängigen Ansprüche gelöst. Vorteilhafte Weiterbildungen der Erfindung ergeben sich aus den Unteransprüchen, wobei auch Kombinationen und Weiterbildungen einzelner Merkmale miteinander denkbar sind.

Ein wesentlicher Gedanke der Erfindung besteht darin, dass der Schlauch mit einfachen Mitteln mit zumindest einer, vorzugsweise aber mehreren Öffnungen versehen werden kann, in welche ein Befestigungsmittel eindringen und so eine hinreichend feste Befestigung schaffen kann. Die Öffnung ist dabei am Schlauch selbst ausgebildet und radial nach außen gerichtet, also ein durchgehendes Loch vom Inneren des Materials des Schlauchs radial nach außen. Die Öffnung ist zudem vom Rand des Schlauchs beabstandet, wobei die Größe des Abstands vorzugsweise entsprechend der auf diesen Teil wirkenden Scherkräfte und auszuhaltenden Zugbelastung am Schlauch definiert ist.

Hinsichtlich des in die Öffnungen jeweils eindringenden Befestigungsmittels sind mehrere Ausgestaltungen denkbar. In einer Variante ist am Anschlussrohrstück jeweils eine der Öffnung entsprechende Rastnase vorgesehen, welche also beispielsweise hinsichtlich der Größe und Dicke der Öffnung so angepasst ist, dass eine Presspassung und ein gewisses Übermaß vorhanden sind.

Die Rastnase ist vorzugsweise in Richtung des Aufschiebens des Schlauchs angeschrägt und weist auf der Gegenseite ein Anschlag auf. Besonders bevorzugt jedoch ist die Rastnase zudem mit einem die Öffnung des Schlauchs hintergreifenden Hinterschnitt versehen. Dieser Hinterschnitt am Anschlussrohrstück kann entweder bei der Fertigung des Gehäuses mit dem Anschlussrohrstück durch entsprechend mehrteilige Masken beim Kunststoffspritzen erzeugt werden.

In einer Ausgestaltung jedoch wird der Hinterschnitt durch Heißverstemmen eines entsprechenden Übermaßes der Rastnase geformt, das heißt die Rastnase weist zunächst ein entsprechendes Übermaß radial nach außen auf und wird nach dem Aufschieben des Schlauches durch Heißverformung dieses Übermaß gezielt in Richtung der Ausbildung eines Hinterschnitts oder eines Kopfes vergleichbar eines Nagels verformt.

Alternativ ist das Befestigungsmittel ein separates Befestigungsteils mit einem der Öffnung näherungsweise entsprechenden Querschnitt, insbesondere ein Stopfen; Nagel oder eine Schraube oder dergleichen und wird durch die Öffnung hindurch bis zum Anschlussrohrstück eingeführt. Auch für die Befestigung dieses separaten Befestigungsteils am Anschlussrohrstück bieten sich eine Reihe bevorzugter Weiterbildungen.

Das Befestigungsmittel ist beispielsweise aus einem für Laser zumindest weitgehend transparenten Kunststoff, das Anschlussrohrstück hingegen stärker für Laser undurchlässig und wird das Befestigungsmittel nach dem Einführen durch in das Befestigungsmittel eingeprägte Laserstrahlung mit dem Anschlussrohrstück verschmolzen. Darüber hinaus kann am Anschlussrohrstück eine Öffnung zur Aufnahme eines Teils des separaten Befestigungsteils vorgesehen sein.

Die Erfindung wird nachfolgend anhand von Ausführungsbeispielen unter Zuhilfenahme von Figuren näher erläutert.

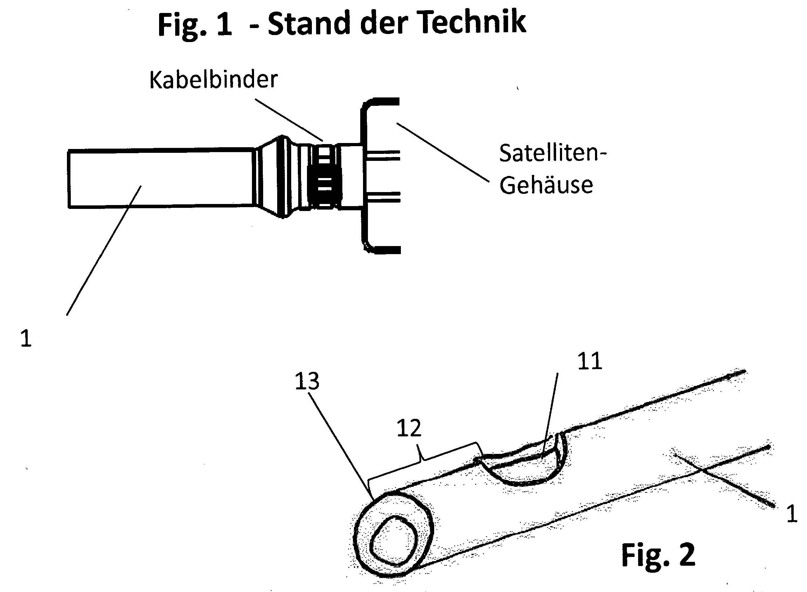

Der aktuelle Aufprallsensor der Continental-Gruppe, üblicherweise als PPS pSAT bezeichnet, besteht aus zwei Drucksatellitengehäusen und einem Silikonschlauch sowie Kabelbindern zur Befestigung und ist in Figur 1 gezeigt. Das Satellitengehäuse weist einen Stutzen (Rohr) mit einer Verdickung am Ende auf. Der Schlauch wird über die Verdickung geschoben und im Anschluss mit einem Kabelbinder fixiert. Damit wird die erforderliche Abzugskraft erreicht. Kabelbinder sind jedoch bei engem Bauraum teils ungünstig und nicht einsetzbar.

Figur 2 zeigt also im überlappenden Abschnitt des Schlauchs 1 hier zunächst eine vom Rand 13 des Schlauchs beabstandete, radial nach außen gerichtete Öffnung 11 z.B. durch Ausstanzen oder Lasern noch ohne Befestigungsmittel. Zudem können auch mehrere solche Öffnungen 11, beispielsweise 2 an gegenüberliegenden Seiten vorgesehen werden, können es auch beispielsweise in 3 je um 120° versetzte Öffnungen 11 sein oder aber diese zueinander versetzt in unterschiedlichem Abstand 12 zum Rand 13 angeordnet sein.

Der Abstand 12 zum Rand 13 als auch die Anzahl, Position und Größe der Öffnungen 11 und deren Abstand und gegebenenfalls Position, insbesondere Versatz voneinander sind abhängig von der Zugbelastung des Schlauches 1 den dabei auftretenden Scherkräften an den Wänden der Öffnungen 11.

Zusätzlich wird also der Stutzen 2 an den Satellitengehäusen mit dazu passenden Erhöhungen 21, 22 ausgeführt. Beim Aufschieben des Schlauches greifen die Erhöhungen in die Öffnungen 11 des Schlauches 1 und es kommt zu einer formschlüssigen Verbindung, die die notwendige Abzugskraft gewährleistet.

In einer bevorzugten Weiterbildung ist die Größe L11 der Öffnung 11 im Schlauch dabei mit einem Übermaß (L11>L21) gegenüber der Größe L21 der Erhöhungen 21 in Richtung R ausgeführt. Dazu kann die Öffnung beispielsweise als Langloch ausgestaltet sein.

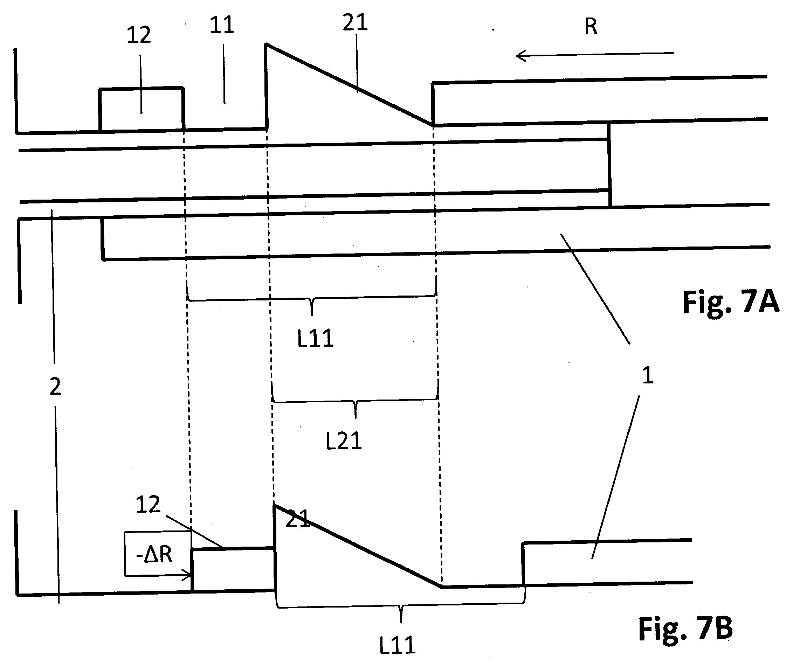

Durch das Übermaß ist ein Toleranzausgleich bei der Schlauchlänge möglich. Vorzugsweise wird der Aufprallsensor zunächst in der Position der Mindestlänge ausgeliefert, kann aber während der Montage im Rahmen des Übermaßes ausgezogen werden, maximal eben bis zum Ende dieses Übermaßes, wie dies anhand der Figuren 7a und /b noch näher skizziert wird. Entsprechend kann die Größe des Übermaßes auch an die erwarteten Toleranzen bei der Montage angepasst werden und bei zwei Gehäusen an je einer Seite des Schlauchs dieses Übermaß an beiden Seiten vorgesehen und so beidseitig ausgeglichen werden.

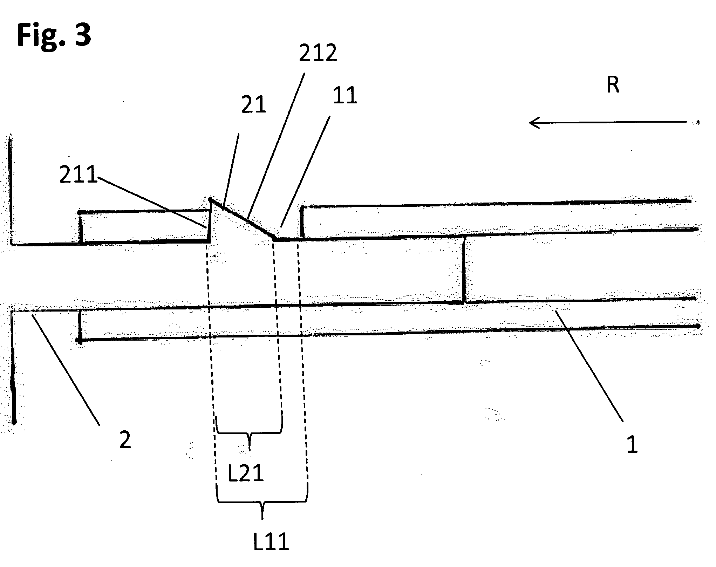

Grundsätzlich ist eine Anwendung dieses Toleranzausgleichs auch bei den anderen Ausgestaltungsvarianten der Befestigungsmittel denkbar, wobei dann aber die finale Befestigung durch Heißverstemmen, Lasern oder Aufsetzen entsprechender Rastmittel erst nach der Montage erfolgen sollte.Figur 3 zeigt nun einen Schnitt durch die Längsachse des Schlauches wobei mit R die Richtung des Aufschiebens des Schlauches 1 auf den Anschlussstutzen 2 in diesem Ausführungsbeispiel gut zu erkennen ist. Am Anschlussrohrstück (2) ist in diesem Ausführungsbeispiel jeweils eine der Öffnung (11) entsprechende Rastnase (21) vorgesehen. Die Rastnase (21) ist hier in Richtung (R) des Aufschiebens des Schlauchs (1) angeschrägt (212) und auf der Gegenseite mit einem Anschlag (211) versehen.

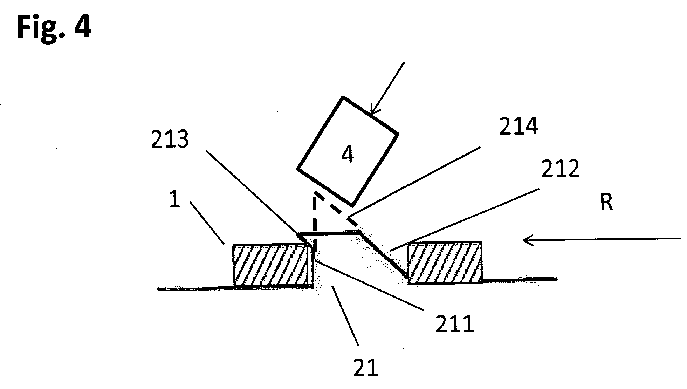

Figur 4 zeigt nun noch eine demgegenüber besonders bevorzugte Weiterbildung, bei der die Rastnase 21 mit einem die Öffnung (11) des Schlauchs hintergreifenden Hinterschnitt 213. Dieser Hinterschnitt (213) ist zudem in diesem Ausführungsbeispiel vorzugsweise durch Heißverstemmen eines entsprechenden, hier skizzenhaft gestrichelt angedeuteten Übermaßes (214) geformt, indem mit einem heißen Stempel (4) in einem zur Richtung R geneigten, spitzen Winkel wie hier skizziert das Übermaß 214 zu dem Hinterschnitt 213 umgeformt wird.

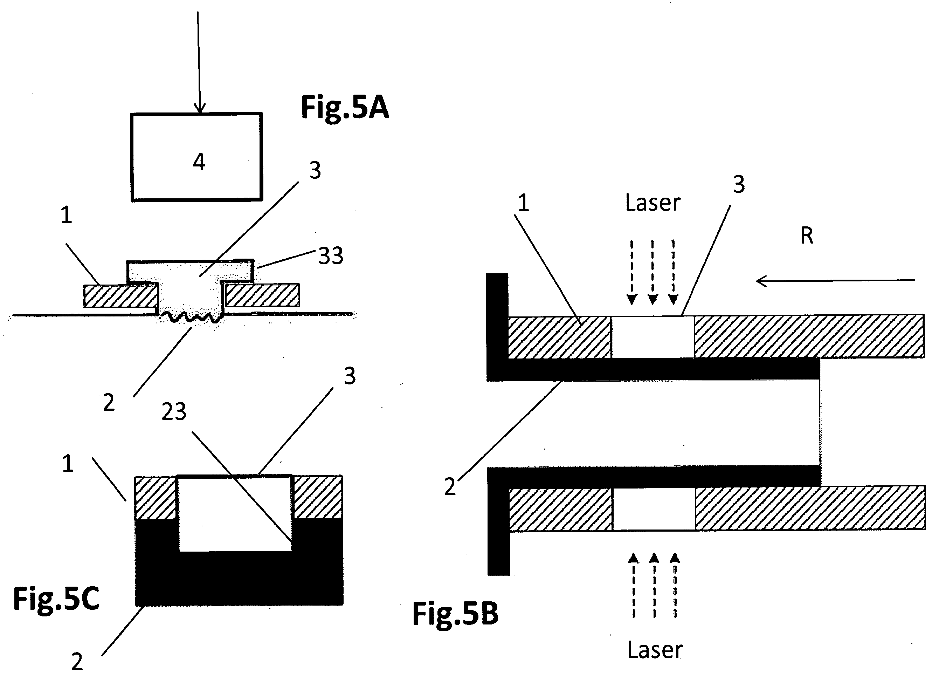

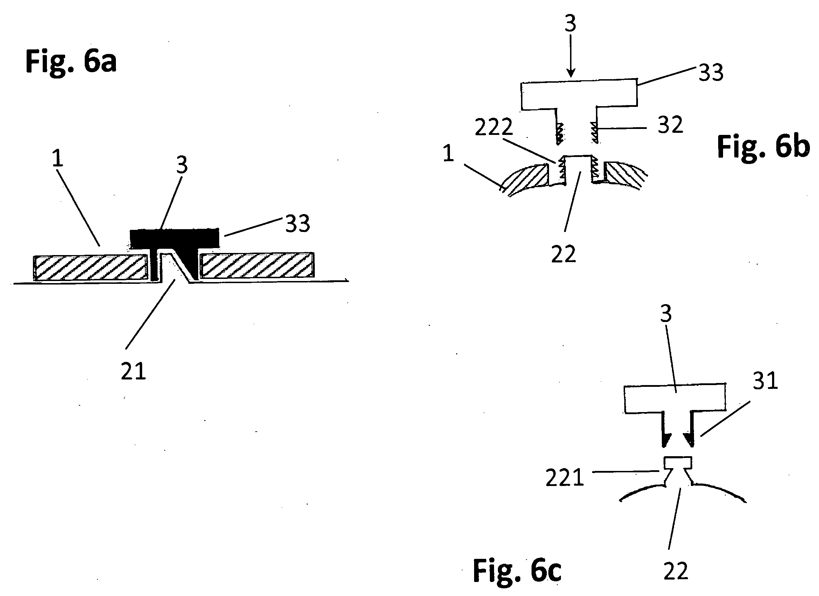

Die folgenden Figuren 5A bis 5B und 6A bis 6C zeigen nun noch Ausgestaltungen, bei denen als Befestigungsmittel ein separates Befestigungsteil 3 vorgesehen ist. Das Befestigungsmittel ist also ein separates Teil (3) mit einem der Öffnung (11) näherungsweise entsprechenden, vorzugsweise geringfügig größer und damit eine Presspassung ausbildenden Querschnitt, insbesondere ein Stopfen, Nagel oder eine Schraube und wird durch die Öffnung hindurch bis zum Anschlussrohrstück (2) eingeführt und dort in geeigneter Weise befestigt. So kann gemäß Figur 5A beispielsweise ein Stopfen oder Nagel Verwendung finden, welcher beispielsweise mit dem Anschlussrohrstück 2 verklebt ist und zudem beispielsweise wiederum durch Heißverstemmen mit einem Stempel 4 oder eben vorgeformt ein Kopf 33 ausgebildet ist, welcher größer ist als die Öffnung 11 im Schlauch 1 und damit den Schlauch 1 sicher hält.

Figur 5B zeigt eine besonders bevorzugte Weiterbildung, bei der das Befestigungsmittel 3 aus einem für Laser zumindest weitgehend transparenten Kunststoff, das Anschlussrohrstück (2) hingegen stärker für Laser undurchlässig und das Befestigungsmittel 3 nach dem Einführen durch in das Befestigungsmittel eingeprägte Laserstrahlung mit dem Anschlussrohrstück 2 verschmolzen ist.

Soll die Befestigung noch weiter verbessert werden, kann darüber hinaus am Anschlussrohrstück (2) eine Öffnung zur Aufnahme eines Teils des separaten Befestigungsteils (3) vorgesehen werden, wie in Figur 5C skizzenhaft angedeutet ist.

Die Figuren 6A bis 6C zeigen nun noch Ausgestaltungen, bei denen am Anschlussrohrstück 2 eine Nase 22 vorgesehen ist, welche vom Inneren des Schlauchs 1 in die Öffnung 11 ragt. Von der Schlauchaußenseite ist durch die Öffnung 11 hindurch auf diese Nase 22 das separate Befestigungsteil (3) aufgesteckt/gedrückt, geklebt oder anderweitig eingeführt. Wie Figur 6A dabei skizziert, kann diese Nase dabei auch als Rastnase 21 geformt sein und trotzdem zusätzlich durch das separate Befestigungsteil 3 weiter gesichert werden.

Wie auch in den vorhergehenden Figuren 5 kann das separate Befestigungsteil 3 jeweils mit der Nase 21,22 verklebt, mittels Laser oder vergleichbar zusätzlich befestigt sein und vorgeformt oder ggf. beispielsweise mittels Stempel heißverformt sein.

Figur 6B zeigt noch eine Variante mit einer Mikroverzahnung, bei welcher am separaten Befestigungsteil 3 bspw. Innen Mikrozähne 32 und an der Nase 22 entsprechende Mikrozähne 222 angeordnet sind, wobei diese so bemessen sind, dass beim Aufschieben des separaten Teils 3 diese über zueinander geformte schräge Seiten unter Aufspreizung des vorzugsweise mit zumindest teilelastischem Material ausgebildeten Durchmessers des Befestigungsteils 3 gleiten.

Dann aber hintergreifen die Mikrozähne 32,222 und weisen diese in die Abzugrichtung jeweils senkrecht zur Abzugsrichtung stehende Wandabschnitte auf, so dass eine Verrastung dieser Mikrozähne 32,222 ineinander erfolgt, sobald die gewünschte Einführtiefe des Teils 3 erreicht ist.

Alternativ dazu kann anstelle der Mikroverzahnung auch eine entsprechende Rastverbindung ausgebildet sein, wie in Figur 6C mit den zwei Rastnasen 31 am separaten Teil 3 und entsprechenden Einraststellen 221 an der Nase 22 des Anschlussrohrstücks 2 skizziert.

Ein vorzugsweise am separaten Teil 3 ausgebildeter Kopf 33 verhindert jeweils ein Abrutschen der Schlauchöffnung über das Teil 3 hinweg. Trotz der Verzahnung gemäß den Figuren 6B und 6C kann natürlich zusätzlich eine Verklebung erfolgen, um die Spielräume der Verrastung zu schließen und ein späteren Lösen der Verrastung zu verhindern.

Bei den beschriebenen Lösungen kann jeweils der bisher verwendete Kabelbinder entfallen und wird der für den Fahrzeugverbau geforderte Bauraum eingehalten. Der Fertigungsprozess ist einfach zu kontrollieren, da optisch überprüft werden kann, ob die Schlauchöffnungen über die Erhöhungen geschoben sind bzw. die Abzugssicherung ausgeformt wurde.

Die Varianten gemäß der Figuren 2 bis 4 benötigen außer dem Schlauch 1 und den Satelliten keine zusätzlichen Bauteile zur Fixierung. Der Fertigungsprozess ist deutlich einfacher und das Lochstanzen kann einfach in den Fertigungsfluss integriert werden, dafür entfällt die komplizierte Montage des Kabelbinders.

Das zusätzliche Befestigungsmittel 3 ist ebenfalls deutlich kostengünstiger als die Variante mit Kabelbinder und leicht zu montieren und gewährleistet besonders hohe Abzugkräfte.

Fig. 7a zeigt dabei die Situation mit maximal aufgeschobenem Schlauch 1, also Nase 21 am rechten Ende der Öffnung 11 und damit kleinster Gesamtlänge des Aufprallsensorsystems, während Fig. 7b den Toleranzausgleich bis zur maximalen Systemlänge, also einem Längengewinn von ΔR durch Ausziehen des Schlauchs1 bis zum linken Anschlag der Öffnung 11 an die Nase 21.

## Patentansprüche

1. Aufprallsensor bestehend aus einem bei einem Aufprall elastisch deformierbaren Schlauch (1) mit einem Hohlraum und zumindest einem Drucksensor zur Erfassung der Druckänderung im Hohlraum des Schlauchs, wobei der Drucksensor am Gehäuse ein Anschlussrohrstück (2) aufweist und ein überlappender Abschnitt des Schlauchs (1) über das Anschlussrohrstück (2) geschoben ist, wobei im überlappenden Abschnitt des Schlauchs (1) zumindest eine vom Rand (13) des Schlauchs beabstandete, radial nach außen gerichtete Öffnung (11) und ein Befestigungsmittel (21,22,3) zum Eindringen in die Öffnung (11) vorgesehen ist, **dadurch gekennzeichnet, dass** am Anschlussrohrstück (2) jeweils eine der Öffnung (11) entsprechende Rastnase (21) vorgesehen ist.

2. Aufprallsensor nach Anspruch 1, **dadurch gekennzeichnet, dass** die Rastnase (21) in Richtung (R) des Aufschiebens des Schlauchs (1) angeschrägt (212) und auf der Gegenseite ein Anschlag (211) mit einem die Öffnung (11) des Schlauchs hintergreifenden Hinterschnitt (213) versehen ist.

3. Aufprallsensor nach Anspruch 2, **dadurch gekennzeichnet, dass** der Hinterschnitt (213) durch Heißverstemmen (4) eines entsprechenden Übermaßes (214) der Rastnase (21) geformt ist.

4. Aufprallsensor bestehend aus einem bei einem Aufprall elastisch deformierbaren Schlauch (1) mit einem Hohlraum und zumindest einem Drucksensor zur Erfassung der Druckänderung im Hohlraum des Schlauchs, wobei der Drucksensor am Gehäuse ein Anschlussrohrstück (2) aufweist und ein überlappender Abschnitt des Schlauchs (1) über das Anschlussrohrstück (2) geschoben ist, wobei im überlappenden Abschnitt des Schlauchs (1) zumindest eine vom Rand (13) des Schlauchs beabstandete, radial nach außen gerichtete Öffnung (11) und ein Befestigungsmittel (21,22,3) zum Eindringen in die Öffnung (11) vorgesehen ist, wobei das Befestigungsmittel ein separates Befestigungsteil (3) mit einem der Öffnung (11) näherungsweise entsprechenden Querschnitt, insbesondere ein Stopfen, Nagel oder eine Schraube ist und durch die Öffnung hindurch bis zum Anschlussrohrstück (2) eingeführt ist, **dadurch gekennzeichnet, dass** das Befestigungsmittel aus einem für Laser zumindest weitgehend transparenten Kunststoff besteht, das Anschlussrohrstück (2) hingegen stärker für Laser undurchlässig ist und das Befestigungsmittel nach dem Einführen durch in das Befestigungsmittel eingeprägte Laserstrahlung mit dem Anschlussrohrstück verschmolzen ist.

5. Aufprallsensor nach Anspruch 4, **dadurch gekennzeichnet, dass** das Anschlussrohrstück (2) eine Öffnung (23) zur Aufnahme eines Teils des separaten Befestigungsteils (3) aufweist.

6. Aufprallsensor bestehend aus einem bei einem Aufprall elastisch deformierbaren Schlauch (1) mit einem Hohlraum und zumindest einem Drucksensor zur Erfassung der Druckänderung im Hohlraum des Schlauchs, wobei der Drucksensor am Gehäuse ein Anschlussrohrstück (2) aufweist und ein überlappender Abschnitt des Schlauchs (1) über das Anschlussrohrstück (2) geschoben ist, wobei im überlappenden Abschnitt des Schlauchs (1) zumindest eine vom Rand (13) des Schlauchs beabstandete, radial nach außen gerichtete Öffnung (11) und ein Befestigungsmittel (21,22,3) zum Eindringen in die Öffnung (11) vorgesehen ist, wobei das Befestigungsmittel ein separates Befestigungsteil (3) mit einem der Öffnung (11) näherungsweise entsprechenden Querschnitt, insbesondere ein Stopfen, Nagel oder eine Schraube ist und durch die Öffnung hindurch bis zum Anschlussrohrstück (2) eingeführt ist, **dadurch gekennzeichnet, dass** das Anschlussrohrstück (2) eine Nase (21,22) aufweist, weiche vom Inneren des Schlauchs aus in die Öffnung (11) ragt und von der Schlauchaußenseite durch die Öffnung (11) auf diese Nase (21,22) das separate Befestigungsteil (3) aufgesteckt ist.

7. Aufprallsensor nach Anspruch 6, **dadurch gekennzeichnet, dass** zwischen Nase (21,22) und separatem Befestigungsteil (3) eine Verklebung und/oder Verrastung erfolgt.

8. Aufprallsensor nach einem der Ansprüche 1-3 oder 6-7, **dadurch gekennzeichnet, dass** an der Nase (21,22) oder dem separaten Befestigungsteil (3) jeweils im montierten Zustand ein Kopf (33) ausgeführt ist, welcher einen größeren Querschnitt aufweist als der Querschnitt der Öffnung (11).

9. Aufprallsensor nach einem der vorangehenden Ansprüche, **dadurch gekennzeichnet, dass** die Öffnung (11) in Richtung R des Aufschiebens des Schlauchs eine Größe (L11) größer als die Größe (L21) der Nase (21,22) aufweist.

## Claims

1. An impact sensor consisting of a hose (1) which is elastically deformable in the event of an impact, having a cavity and at least one pressure sensor for detecting the pressure change in the cavity of the hose, wherein the pressure sensor comprises a connecting pipe length (2) on the housing and an overlapping section of the hose (1) is pushed over the connecting pipe length (2), wherein at least one radially outwardly facing opening (11) located at a distance from the edge (13) of the hose and attachment means (21,22,3) for penetrating the opening (11) are provided in the overlapping section of the hose (1), **characterized in that** a latching nose (21) corresponding to the opening (11) is, in each case, provided on the connecting pipe length (2).

2. The impact sensor according to Claim 1, **characterized in that** the latching nose (21) is tapered (212) in the direction (R) in which the hose (1) is pushed on and a stop (211) having an undercut (213) which engages the opening (11) of the hose is provided on the opposite side.

3. The impact sensor according to Claim 2, **characterized in that** the undercut (213) is formed by hot caulking (4) a corresponding excess length (214) of the latching nose (21).

4. An impact sensor consisting of a hose (1) which is elastically deformable in the event of an impact, having a cavity and at least one pressure sensor for detecting the pressure change in the cavity of the hose, wherein the pressure sensor comprises a connecting pipe length (2) on the housing and an overlapping section of the hose (1) is pushed over the connecting pipe length (2), wherein at least one radially outwardly facing opening (11) located at a distance from the edge (13) of the hose and attachment means (21,22,3) for penetrating the opening (11) are provided in the overlapping section of the hose (1),
wherein the attachment means take the form of a separate attachment piece (3) having a cross-section which corresponds approximately to the opening (11), in particular a plug, nail or screw, which is inserted through the opening up to the connecting pipe length (2), **characterized in that**
the attachment means consists of a plastic which is at least largely transparent to lasers, whilst the connecting pipe length (2) is considerably more opaque to lasers and the attachment means are fused, following insertion, by means of laser radiation impressed into the attachment means, to the connecting pipe length.

5. The impact sensor according to Claim 4, **characterized in that** the connecting pipe length (2) comprises an opening (23) for receiving a part of the separate attachment piece (3).

6. An impact sensor consisting of a hose (1) which is elastically deformable in the event of an impact, having a cavity and at least one pressure sensor for detecting the pressure change in the cavity of the hose, wherein the pressure sensor comprises a connecting pipe length (2) on the housing and an overlapping section of the hose (1) is pushed over the connecting pipe length (2), wherein at least one radially outwardly facing opening (11) located at a distance from the edge (13) of the hose and attachment means (21,22,3) for penetrating the opening (11) are provided in the overlapping section of the hose (1),
wherein the attachment means take the form of a separate attachment piece (3) having a cross-section approximately corresponding to the opening (11), in particular a plug, nail or screw, which is inserted through the opening up to the connecting pipe length (2), **characterized in that**
the connecting pipe length (2) comprises a nose (21,22) which projects from the inside of the hose outwardly into the opening (11) and the separate attachment piece (3) is fitted from the outside of the hose through the opening (11) onto said nose (21,22).

7. The impact sensor according to Claim 6, **characterized in that** bonding and/or latching is effected between the nose (21,22) and the separate attachment piece (3).

8. The impact sensor according to any one of Claims 1 - 3 or 6 - 7, **characterized in that** a head (33) is formed, in each case, in the assembled state, on the nose (21,22) or the separate attachment piece (3), which head has a larger cross-section than the cross-section of the opening (11).

9. The impact sensor according to any one of the preceding claims, **characterized in that** the opening (11) in the direction R that the hose is pushed on has a dimension (L11) larger than the dimension (L21) of the nose (21,22).

## Revendications

1. Capteur de choc, composé d'un tuyau (1) élastiquement déformable en cas de choc, avec une cavité et au moins un capteur de pression pour la détection de la variation de pression dans la cavité du tuyau, le capteur de pression présentant sur le boîtier une pièce tubulaire de raccordement (2), et un tronçon en chevauchement du tuyau (1) étant poussé sur la pièce tubulaire de raccordement (2), au moins une ouverture (11) dirigée radialement vers l'extérieur et espacée du bord (13) du tuyau et un moyen de fixation (21, 22, 3) destiné à pénétrer dans l'ouverture (11) étant prévus dans le tronçon en chevauchement du tuyau (1), **caractérisé en ce que**, sur la pièce tubulaire de raccordement (2), il est prévu respectivement un bec d'encliquetage (21) correspondant à l'ouverture (11).

2. Capteur de choc selon la revendication 1, **caractérisé en ce que** le bec d'encliquetage (21) est biseauté (212) dans la direction (R) du coulissement du tuyau (1), et **en ce que**, sur le côté opposé, il est prévu une butée (211) avec une contre-dépouille (213) agrippant par l'arrière l'ouverture (11) du tuyau.

3. Capteur de choc selon la revendication 2, **caractérisé en ce que** la contre-dépouille (213) est formée par matage à chaud (4) d'un surdimensionnement (214) du bec d'encliquetage (21).

4. Capteur de choc, composé d'un tuyau (1) élastiquement déformable en cas de choc, avec une cavité et au moins un capteur de pression pour la détection de la variation de pression dans la cavité du tuyau, le capteur de pression présentant sur le boîtier une pièce tubulaire de raccordement (2), et un tronçon en chevauchement du tuyau (1) étant poussé sur la pièce tubulaire de raccordement (2), au moins une ouverture (11) dirigée radialement vers l'extérieur et espacée du bord (13) du tuyau et un moyen de fixation (21, 22, 3) destiné à pénétrer dans l'ouverture (11) étant prévus dans le tronçon en chevauchement du tuyau (1),
le moyen de fixation étant une pièce de fixation (3) séparée avec une section transversale correspondant approximativement à l'ouverture (11), en particulier un bouchon, un clou ou une vis, et étant introduit à travers l'ouverture jusqu'à la pièce tubulaire de raccordement (2), **caractérisé en ce que**
le moyen de fixation se compose d'une matière plastique au moins largement transparente à des lasers, **en ce que**, en revanche, la pièce tubulaire de raccordement (2) est plus fortement imperméable aux laser et **en ce que**, après l'introduction, le moyen de fixation est fondu avec la pièce tubulaire de raccordement par le rayonnement laser appliqué dans le moyen de fixation.

5. Capteur de choc selon la revendication 4, **caractérisé en ce que** la pièce tubulaire de raccordement (2) présente une ouverture (23) destinée à recevoir une partie de la pièce de fixation (3) séparée.

6. Capteur de choc, composé d'un tuyau (1) élastiquement déformable en cas de choc, avec une cavité et au moins un capteur de pression pour la détection de la variation de pression dans la cavité du tuyau, le capteur de pression présentant sur le boîtier une pièce tubulaire de raccordement (2), et un tronçon en chevauchement du tuyau (1) étant poussé sur la pièce tubulaire de raccordement (2), au moins une ouverture (11) dirigée radialement vers l'extérieur et espacée du bord (13) du tuyau et un moyen de fixation (21, 22, 3) destiné à pénétrer dans l'ouverture (11) étant prévus dans le tronçon en chevauchement du tuyau (1),
le moyen de fixation étant une pièce de fixation (3) séparée avec une section transversale correspondant approximativement à l'ouverture (11), en particulier un bouchon, un clou ou une vis, et étant introduit à travers l'ouverture jusqu'à la pièce tubulaire de raccordement (2), **caractérisé en ce que** la pièce tubulaire de raccordement (2) présente un bec (21, 22) qui dépasse à partir de l'intérieur du tuyau dans l'ouverture (11), et la pièce de fixation (3) séparée est emmanchée sur ce bec (21, 22) à partir du côté extérieur de tuyau à travers l'ouverture (11).

7. Capteur de choc selon la revendication 6, **caractérisé en ce qu'**un encollage et/ou un encliquetage est effectué entre le bec (21, 22) et la pièce de fixation (3) séparée.

8. Capteur de choc selon l'une des revendications 1 à 3 ou 6 à 7, **caractérisé en ce que**, sur le bec (21, 22) ou sur la pièce de fixation (3) séparée, respectivement à l'état monté, il est réalisé une tête (33) qui présente une section transversale plus grande que la section transversale de l'ouverture (11).

9. Capteur de choc selon l'une des revendications précédentes, **caractérisé en ce que** l'ouverture (11) présente, dans la direction R du coulissement du tuyau, une dimension (L11) plus grande que la dimension (L21) du bec (21, 22).
